# EUROPÄISCHE PATENTANMELDUNG

(11) **EP 0 755 151 A2**
(43) Veröffentlichungstag der Anmeldung: **22.01.1997**
(21) Anmeldenummer: 96109654.2
(22) Anmeldetag: 15.06.1996
(51) Int. Cl.: H04N 5/225

(54) **Kamera mit einer Weisskappe**

(30) Priorität: 22.06.1995 DE 19522206
(71) Anmelder: DEUTSCHE THOMSON-BRANDT GMBH, 78048 Villingen-Schwenningen (DE)
(72) Erfinder: Seegert, Bernhard, 78052 Villingen-Schwenningen (DE); Spruck, Manfred, 67100 Strasbourg (FR); Machon, Winfried, 78141 Schönwald (DE)
(74) Vertreter: Ahrens, Thomas, Dipl.-Phys.

(57) **Zusammenfassung**

Eine Kamera, insbesondere für ein Fernsehtelefon, auch Videophon genannt, enthält eine Weißkappe, die für den Weißabgleich vor das Objektiv schwenkbar und für die Bildaufnahme von dem Objektiv wegschwenkbar ist. Für eine derartige schwenkbare Kappe sind konstruktive Bauteile notwendig wie Schwenkhebel, elektromotorischer Antrieb und Rückholfedern.

Gemäß einer ersten Lösung ist die Weißkappe durch einen U-förmigen Bügel (8) gebildet, der aus opakem Kunststoff besteht und mittels eines Permanentmagneten (13) und einer Spule (15) in zwei verschiedene stabile Stellungen schwenkbar ist. Gemäß einer zweiten Ausführungsform ist vor dem Objektiv (1) ein sogenanntes Flüssigkristall-Lichtfilter (17) angeordnet, das durch unterschiedliche angelegte Spannungen zwischen einem klaren Zustand und einem opaken Zustand umschaltbar ist.

## Beschreibung

Die Erfindung geht aus von einer Kamera gemäß dem Oberbegriff des Anspruchs 1. Bei einer derartigen Kamera, insbesondere für ein Fernsehtelefon, auch Videophon genannt, muß in regelmäßigen Zeitabständen ein sogenannter Weißabgleich durchgeführt werden. Das bedeutet, die Verstärkung der Farbsignale R, G, B im Weg des von der Kamera gelieferten Signals müssen so eingestellt werden, daß weiße Bildpartien bei der Bildwiedergabe auch weiße Bildstellen erzeugen.

Hierzu ist es bekannt, für den Weißabgleich vor das Objektiv der Kamera eine sogenannte Weißkappe zu schwenken. Diese besteht aus einem nicht durchsichtigen, aber durchscheinenden, milchigen Material, das daß Licht der Lichtquelle spektralunabhängig, das Bild selbst jedoch nicht durchläßt. Diese Eigenschaft der Lichtdurchlässigkeit wird auch als opak bezeichnet.

Eine derartige Weißkappe muß somit durch elektrische Steuerung, also insbesondere elektromagnetisch, für die Bildaufnahme von dem Objektiv weggeschwenkt und für den Weißabgleich vor das Objektiv geschwenkt werden. Dadurch ergibt sich ein nennenswerter konstruktiver Aufwand in Form von schwenkbaren Teilen, Rückholfedern und elektromotorischen Antrieben. Die Weißkappe wird bei herkömmlichen Kameras manuell aufgesetzt.

Der Erfindung liegt die Aufgabe zugrunde, den konstruktiven Aufwand für eine derartige Weißkappe zu verringern. Diese Aufgabe wird durch die im Anspruch 1 angegebene Erfindung gelöst. Vorteilhafte Weiterbildungen der Erfindung sind in den Unteransprüchen angegeben.

Gemäß einer ersten Ausführungsform der Erfindung ist die Weißkappe durch den Basisschenkel eines U-förmigen Bügels aus opaken Kunststoff gebildet, dessen parallele Schenkel schwenkbar am Objektivgehäuse gelagert sind, und an einem der parallelen Schenkel ist ein Permanentmagnet befestigt, der mit einer am Objektivgehäuse angeordneten Spule zusammenwirkt.

Durch diese Lösung ergibt sich ein konstruktiv besonders einfacher Aufbau. Der Bügel hat zwei stabile Stellungen. Durch einen kurzen Gleichstromstoß mit der ersten Polarität wird der Bügel in eine erste stabile Stellung gebracht, in der der als Weißkappe dienende Basisschenkel sich vor dem Objektiv befindet. Durch einen Gleichstromstoß der zweiten Polarität wird der Bügel in eine zweite stabile Stellung gebracht, in der der Basisschenkel das Objektiv für eine Bildaufnahme freigibt. Vorteilhaft dabei ist, daß der Strom nur kurze Zeit von z.B. 0,5 s fließen muß und kein Dauerstrom notwendig ist. Außerdem sind keine Rückholfeder und auch kein Elektromotor erforderlich.

Die beiden parallelen Schenkel des Bügels umfassen das Objektivgehäuse beidseitig derart, daß der Basisschenkel in der Abdeckstellung für das Objektiv unmittelbar vor dem Objektiv liegt.

Das Permanentmagnet liegt vorzugsweise an der Außenseite einer der parallelen Schenkel und die Spule an der Innenseite eines parallel zu dem Außenschenkel verlaufenden, am Objektivgehäuse angebrachten Steges. Dadurch ergibt sich ein besonders gedrungener, platzsparender und konstengünstiger Aufbau.

Bei einer zweiten Ausführungsform der Erfindung ist vor dem Objektiv ein sogenanntes Flüssigkristall-Lichtfilter angeordnet, das durch eine angelegte Spannung unterschiedlicher Amplitude zwischen einem klaren Zustand und einem opaken Zustand umschaltbar ist.

Ein derartiges Lichtfilter, das im englischen Sprachgebrauch auch als "Liquid Crystal light shutter window" bezeichnet wird, enthält eine Emulsion aus Flüssigkristall, die zwischen zwei leitenden transparenten Filmen aus Kunststoff eingebettet ist. Wenn an dieses Lichtfilter keine Spannung angelegt ist, wird das Filter durch eine Streuung des Lichtes an den Flüssigkristallen durchscheinend, milchig oder opak, also nicht durchsichtig. In diesem Zustand kann dann das Lichtfilter als Weißkappe dienen. Wenn an das Lichtfilter eine Spannung, z.B. eine Wechselspannung von 12 V oder 60 - 90 V angelegt ist, kommt es zu einer derartigen Ausrichtung der Flüssigkristalle, daß das Lichtfilter durchsichtig, also klar wird und das Objektiv für eine Bildaufnahme freigibt. Die Lichtdurchlässigkeit beträgt dabei ungefähr 70 %. Dieses Lichtfilter wird also in vorteilhafter Weise als Weißkappe verwendet. Es wird somit für ein derartiges Lichtfilter mit Flüssigkristallen ein neuartiges Anwendungsgebiet erschlossen. Diese Lösung hat den Vorteil, daß keine bewegten Teile mehr notwendig sind, also auch der elektro/mechanische Antrieb entfällt.

An das Lichtfilter kann auch eine Spannung mit einem derartigen Mittelwert angelegt werden, das daß Lichtfilter einen Zwischenwert zwischen dem klaren und dem opaken Zustand annimmt. Durch eine besondere Steuerung mit unterschiedlichen Spannungen kann auch eine Abschattung eines zu hellen Lichtes oder eine höhere Transmission eingestellt werden, so daß mehr Licht für den Weißabgleich auf das Objektiv gelangt.

Die Erfindung wird im folgenden anhand der Zeichnung an zwei Beispielen erläutert. In der Zeichnung zeigen
- Fig. 1: im Prinzip eine Kamera mit der Signalverarbeitungsschaltung und einer schwenkbaren Weißkappe,
- Fig. 2,3: ein Ausführungsbeispiel für die erste Ausführungsform der Erfindung mit einem schwenkbaren Bügel und
- Fig. 4: ein Ausführungsbeispiel für die zweite Ausführungsform der Erfindung.

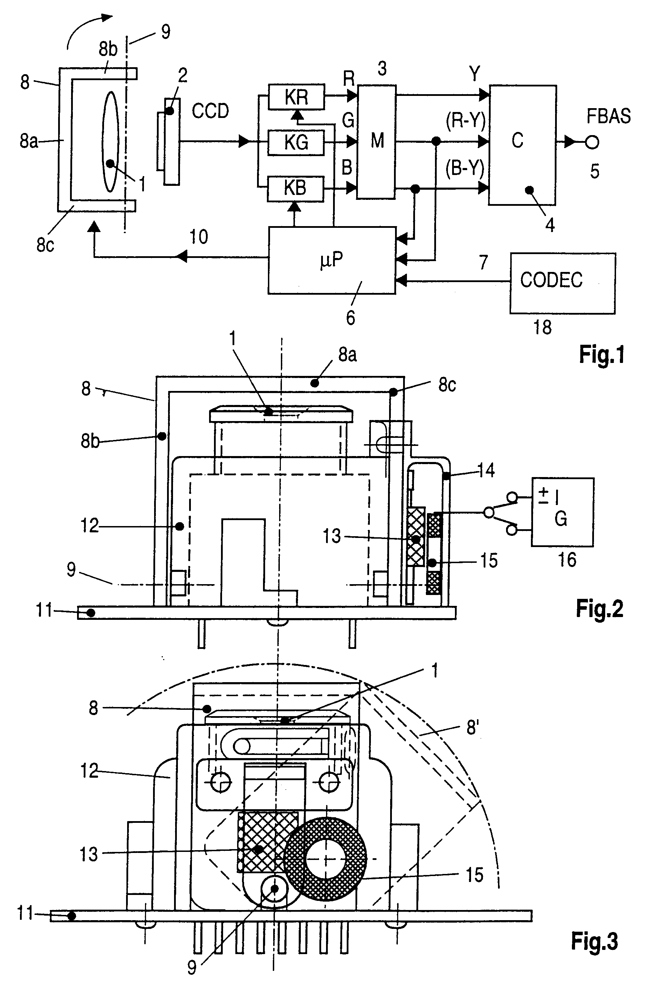

Fig. 1 zeigt in vereinfachter Form den Aufbau einer Kamera. Dargestellt sind das Objektiv 1, der als opto/elektrischer-Wandler dienende CCD-Sensor 2, Verstärker KR, KG, KB für die von dem Sensor 2 gelieferten Farbsignale R, G, B, die Matrix 3 zur Erzeugung des Leuchtdichtesignals Y und der Farbdifferenzsignale (R-Y) und (B-Y) sowie der Coder 4 zur Erzeugung des FBAS-Signals an der Klemme 5.
Der Mikroprozessor 6 wird mit den Farbdifferenzsignalen (R-Y) und (B-Y) gespeist und steuert die Verstärkung der Verstärker KR und KB, also die Verstärkung der Farbsignale R, B im Sinne eines Weißabgleichs. Der Mikroprozessor 6 wird über die Leitung 7 von dem Codec (18) zur Datenkompression für den Weißabgleich freigegeben.

Vor dem Objektiv 1 ist der U-förmige Bügel 8 mit dem Basisschenkel 8a und den beiden parallelen Schenkeln 8b und 8c um die Achse 9 schwenkbar gelagert. Der U-förmige Bügel 8 besteht aus einem nicht durchsichtigen, nämlich durchscheinenden milchigen oder opaken Kunststoff. In der dargestellten Stellung bildet somit der Basisschenkel 8a die Weißkappe vor dem Objektiv 1 für den beschriebenen Weißabgleich.

Für die Bildaufnahme wird der Bügel 8, wie symbolisch durch die Leitung 10 angedeutet, elektromagnetisch um die Achse 9 geschwenkt. Der Basisschenkel 8a kommt somit aus dem Bereich des Objektivs heraus und gibt das Objektiv 1 für die Bildaufnahme frei. Der Bügel 8 hat zwei stabile Stellungen, in die er durch Gleichstromstöße vom Mikroprozessor 6 über die Leitung 10 schwenkbar ist.

Fig. 2, 3 zeigen die konstruktive Ausbildung des Bügels 8 mit dem elektromagnetischen Antrieb in zwei Ansichten. Auf der Grundplatte 11 ist das das Objektiv 1 tragende Objektivgehäuse 12 gelagert. Der Bügel 8 ist über seine parallelen Schenkel 8b und 8c um die Achse 9 an dem Objektivgehäuse 12 schwenkbar gelagert. An der Außenseite des Schenkels 8c ist der Permanentmagnet 13 befestigt. Das Objektivgehäuse 12 ist mit einem Bügel 14 versehen, an dem gegenüberliegend dem Permanentmagneten 13 eine Spule 15 befestigt ist. Die Spule 15 ist an den Stromgenerator 16 angeschlossen, der kurze Gleichstromstöße unterschiedlicher Polarität liefert und in Fig. 1 Bestandteil des Mikroprozessors 6 ist.

Fig. 3 zeigt die Anordnung von Fig. 2 von der Seite. Der Bügel 8 ist um die Achse 9 in die gestrichelt gezeichnete Stellung 8' schwenkbar, in der das Objektiv 1 für eine Bildaufnahme frei gegeben wird.

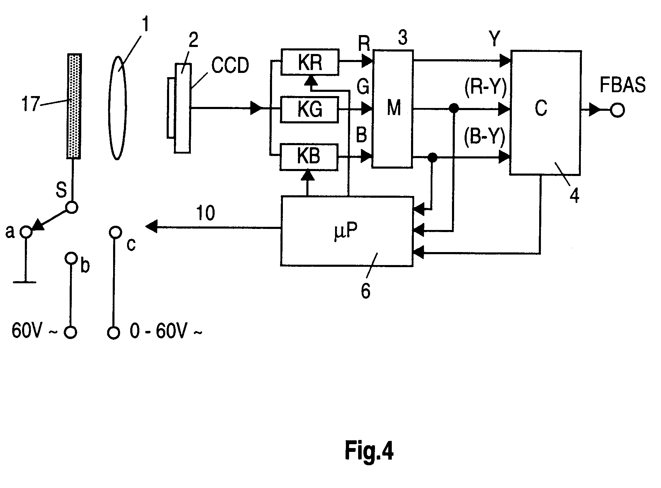

Fig. 4 zeigt wieder den Kameraaufbau gemäß Fig. 1. Vor dem Objektiv 1 ist jedoch kein bewegbares Element vorgesehen.

Vielmehr ist dort das Flüssigkristall-Lichtfilter 17 fest angeordnet. Mit dem Schalter S sind an das Lichtfilter 17 verschiedene Spannungen anschaltbar. In einer ersten Stellung a ist an das Lichtfilter 17 keine Spannung angelegt. Dann ist das Lichtfilter 17 nicht durchsichtig, sondern durch eine zufallsausgerichtete Orientierung der Flüssigkristalle nur durchscheinend, milchig oder opak. Das Filter 17 dient dann als Weißkappe in dem beschriebenen Sinne. In einer zweiten Stellung b des Schalters S ist eine Wechselspannung von 60 Volt angelegt. Dadurch kommt es zu einer derartigen Ausrichtung der Flüssigkristalle, daß nunmehr das Lichtfilter durchsichtig, transparent oder klar ist mit einem Durchlässigkeitsfaktor von 70 %. Das Lichtfilter 17 wirkt dann wie eine Glasscheibe mit geringem Lichtverlust, so daß die Kamera für die Aufnahme eines Bildes geeignet ist. In einer dritten Stellung c des Schalters S ist eine zwischen 0 und 60 Volt einstellbare Spannung angelegt. Dadurch kann die Eigenschaft des Lichtfilters 17 hinsichtlich Lichtdurchlässigkeit geändert werden, z.B. im klaren Zustand für eine Abschattung eines zu hellen Lichtes oder im opaken Zustand, damit mehr Licht für den Weißabgleich auf den CCD-Wandler 2 gelangt.

## Patentansprüche

1. Kamera mit einer Weißkappe, die das Objektiv (1) zum Weißabgleich abdeckt und zur Bildaufnahme freigibt, **dadurch gekennzeichnet**, daß
a) die Weißkappe durch den Basisschenkel (8a) eines U-förmigen Bügels (8) aus opakem Kunststoff gebildet ist, dessen parallele Schenkel (8b, 8c) schwenkbar am Objektivgehäuse (12) gelagert sind, und daß an einem der parallelen Schenkel (8c) ein Permanentmagnet (13) befestigt ist, der mit einer am Objektivgehäuse (12) angeordneten Spule (15) zusammenwirkt, oder
b) vor dem Objektiv (1) ein sogenanntes Flüssigkristall-Lichtfilter (17) angeordnet ist, das durch eine angelegte Spannung unterschiedlicher Amplitude zwischen einem klaren Zustand und einem opaken Zustand umschaltbar ist.

2. Kamera nach Anspruch 1, **dadurch gekennzeichnet**, daß die Spule (15) an eine Steuerschaltung (16) angeschlossen ist, die wahlweise einen Gleichstromstoß mit der ersten oder zweiten Polarität liefert.

3. Kamera nach Anspruch 1, **dadurch gekennzeichnet**, daß die beiden parallelen Schenkel (8b, 8c) das Objektivgehäuse (12) beidseitig so umfassen, daß der Basisschenkel (8a) in der Abdeckstellung unmittelbar vor dem Objektiv (1) liegt.

4. Kamera nach Anspruch 3, **dadurch gekennzeichnet**, daß der Permanentmagnet (13) an der Außenseite eines der parallelen Schenkel (8c) und die Spule (15) an der Innenseite eines parallel zu dem parallelen Schenkel (8c) verlaufenden, am Objektivgehäuse (12) angebrachten Steges (14) befestigt ist.

5. Kamera nach Anspruch 1, **dadurch gekennzeichnet**, daß an das Lichtfilter (17) eine Spannung mit einem derartigen Mittenwert anschaltbar ist, daß das Lichtfilter (17) einen Zwischenwert zwischen dem klaren und dem opaken Zustand annimmt.

6. Kamera nach Anspruch 1, **dadurch gekennzeichnet, daß** das Lichtfilter (17) auf vorhandene Objektive nachrüstbar ist.
